# EUROPEAN PATENT APPLICATION

(11) **EP 2 757 843 A1**
(43) Date of publication of application: **23.07.2014**
(21) Application number: 13151883.9
(22) Date of filing: 18.01.2013
(51) Int. Cl.: H04W 72/00, H04W 28/26

(54) **Reserving uplink transmission capacity**

(71) Applicant: Nokia Solutions and Networks Oy, 02610 Espoo (FI)
(72) Inventor: Koskinen, Henri Markus, 02600 Espoo (FI)
(74) Representative: Borgström, Markus

(57) **Abstract**

There are provided measures for shared uplink resource reservation per group-communication service. Such measures exemplarily comprise reserving uplink transmission capacity for a group communication service, and assigning said reserved uplink transmission capacity jointly to a plurality of bearers associated with said group communication service.

## Description

### Field

The present invention relates to reserving uplink transmission capacity for a service. More specifically, the present invention exemplarily relates to measures (including methods, apparatuses and computer program products) for realizing uplink resource reservation per service.

### Background

The present specification generally relates to communications-resource management including but not limited to radio resource management (RRM) in providing a group-communication service in Long Term Evolution (LTE) network deployments. One purpose may be to make LTE usable for mission-critical group communication for public-safety officials such as for example police, which is currently encouraged by the 3^{rd} Generation Partnership Project (3GPP).

Easily conceivable in this context is for example a voice group call with a possibly large number of participants per cell at an incident location. Based on legacy public-mobile radio systems, such a service may be imaginable to pose strict requirements on the voice-path setup delay. Such a service may be envisioned to come with floor control, i.e. functionality to hand the right to speak (the speaker right) to only one participant at a time in order to avoid the group call becoming incomprehensible by many people attempting to speak on the line simultaneously. It is further conceivable that such floor control may most likely be handled at application layer.

Because of the strict requirements on the delay between a user's request to talk in a group call and its talking being enabled, the participants of a group call need to have their bearers used for their possible uplink transmission in the call readily established, i.e. the delay requirements may not allow setting up the bearer and the required resources not until a speaker-right request.

Based on such a demand for reserved resources in such a group call scenario, the question arises how the network side, e.g. an evolved NodeB (eNB), could reserve resources for the uplink of a group call. The critical nature of such a call certainly may point towards a guaranteed-bitrate reservation.

QoS parameters defined according to current specifications may fail in providing a solution to this. Namely, according to the current specifications a per-bearer guaranteed bit rate (GBR), a coupled maximum bit rate (MBR), a per access point name (APN, which is specific to a user equipment (UE)) aggregate maximum bit rate (APN-AMBR) and a per UE aggregate maximum bit rate (UE-AMBR) may be defined. At least the APN-AMBR and UE-AMBR may apply only to non-GBR traffic.

Applying those known techniques or parameters for defining a guaranteed bitrate in a group call scenario, in the worst case, an eNB's admission control may deny uplink access of UEs to a group call because of the seemingly overwhelming uplink-resource-reservation requirement, even though there is actually no overload, e.g. even if the group-call downlink may be delivered as a common broadcast transmission to all participants of a group call. It is noted that an uplink bottleneck possibly becoming a problem may be e.g. the air interface between the UEs and the eNB(s) or the network side backhaul. According to Global System for Mobile Communications (GSM) specifications, a voice group call service (VGCS) may be provided. VGCS may have floor control built-in. Further, according to VGCS, a voice group call channel may have an uplink for shared use, which may be subject to the floor control.

Hence, the problem arises that reserved resources are to be provided in such a group call scenario. Unnecessary load at the network side should be avoided. A solution of the problem preferably should be transparent to UEs in order to prevent necessary modifications at the terminals side.

Hence, there is a need to provide a solution for this problem.

### Summary

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a method comprising reserving uplink transmission capacity for a service, and assigning said reserved uplink transmission capacity jointly to a plurality of bearers associated with said service.

According to an exemplary aspect of the present invention, there is provided a method comprising controlling uplink transmission capacity reservation for a service and assignment of said uplink transmission capacity reservation jointly to a plurality of bearers associated with said service.

According to an exemplary aspect of the present invention, there is provided an apparatus comprising reserving means configured to reserve uplink transmission capacity for a service, and assigning means configured to assign said reserved uplink transmission capacity jointly to a plurality of bearers associated with said service.

According to an exemplary aspect of the present invention, there is provided an apparatus comprising controlling means configured to control uplink transmission capacity reservation for a service and assignment of said uplink transmission capacity reservation jointly to a plurality of bearers associated with said service.

According to an exemplary aspect of the present invention, there is provided an apparatus comprising means for reserving uplink transmission capacity for a service, and means for assigning said reserved uplink transmission capacity jointly to a plurality of bearers associated with said service.

According to an exemplary aspect of the present invention, there is provided an apparatus comprising means for controlling uplink transmission capacity reservation for a service and assignment of said uplink transmission capacity reservation jointly to a plurality of bearers associated with said service.

According to an exemplary aspect of the present invention, there is provided an apparatus comprising a reserving module configured to reserve uplink transmission capacity for a service, and an assigning module configured to assign said reserved uplink transmission capacity jointly to a plurality of bearers associated with said service.

According to an exemplary aspect of the present invention, there is provided an apparatus comprising a controlling module configured to control uplink transmission capacity reservation for a service and assignment of said uplink transmission capacity reservation jointly to a plurality of bearers associated with said service.

According to an exemplary aspect of the present invention, there is provided a system comprising at least two apparatuses according to different one of the aforementioned apparatus-related exemplary aspects of the present invention.

According to an exemplary aspect of the present invention, there is provided a computer program product comprising computer-executable computer program code which, when the program is run on a computer (e.g. a computer of an apparatus according to any one of the aforementioned apparatus-related exemplary aspects of the present invention), is configured to cause the computer to carry out the method according to any one of the aforementioned method-related exemplary aspects of the present invention.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient radio resource management in group call scenarios to thereby solve at least part of the problems and drawbacks identified in relation to the prior art.

By way of exemplary embodiments of the present invention, there is provided shared uplink resource reservation per service (for example a group-communication service). More specifically, by way of exemplary embodiments of the present invention, there are provided measures and mechanisms for realizing shared uplink resource reservation per such a service.

Thus, improvement is achieved by methods, apparatuses and computer program products enabling/realizing shared uplink resource reservation per service.

### Brief description of the drawings

In the following, the present invention will be described in greater detail by way of non-limiting examples with reference to the accompanying drawings, in which
Figure 1 is a block diagram illustrating an apparatus according to exemplary embodiments of the present invention,
Figure 2 is a block diagram illustrating an apparatus according to exemplary embodiments of the present invention,
Figure 3 is a block diagram illustrating an apparatus according to exemplary embodiments of the present invention,
Figure 4 is a block diagram illustrating an apparatus according to exemplary embodiments of the present invention,
Figure 5 is a schematic diagram of a procedure according to exemplary embodiments of the present invention,
Figure 6 is a schematic diagram of a procedure according to exemplary embodiments of the present invention,
Figure 7 is a schematic diagram of a procedure according to exemplary embodiments of the present invention,
Figure 8 is a schematic diagram of a procedure according to exemplary embodiments of the present invention,
Figure 9 is a diagram illustrating principle and possible scopes of group communication service guaranteed bit rate according to exemplary embodiments of the present invention,
Figure 10 is a diagram illustrating possible signaling according to exemplary embodiments of the present invention,
Figure 11 is a diagram illustrating possible signaling according to exemplary embodiments of the present invention,
Figure 12 is a diagram illustrating possible signaling according to exemplary embodiments of the present invention,
Figure 13 is a block diagram alternatively illustrating apparatuses according to exemplary embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. In particular, Group call or group communication services and scenarios are used as a non-limiting example for the applicability of thus described exemplary embodiments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) shared uplink resource reservation per service, for example a group-communication service.

The present invention considers that because in a group call scenario typically only one call participant may be speaking in a group call at a time (being a strict bound if floor control is applied), it is not necessary to establish dedicated, guaranteed uplink resources for every UE participating in the call. In particular in view of that the number of UEs in such group call may be high even in one cell. Unnecessary loss of resources would be a result of establishing dedicated, guaranteed uplink resources for every UE participating in such group call.

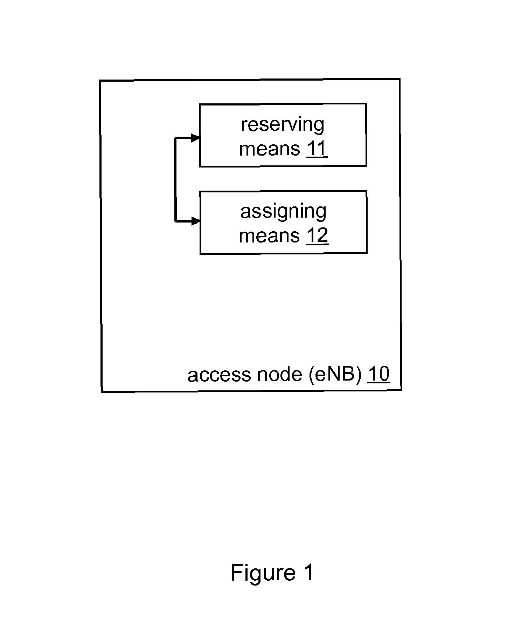

Figure 1 is a block diagram illustrating an apparatus according to exemplary embodiments of the present invention.

As shown in Figure 1, according to exemplary embodiments of the present invention, the apparatus is an access node 10 comprising a reserving means 11 and an assigning means 12. The reserving means 11 reserves uplink transmission capacity for a service. The assigning means 12 assigns the reserved uplink transmission capacity jointly to a plurality of bearers associated with said service.

That is, according to the present invention, a shared uplink resource reservation is introduced into the quality of service (QoS) framework. It is to be noted that such shared uplink resource reservation is not to be confused with a shared uplink resource, or shared uplink logical channel with given identifier according to current LTE specifications. The reservation (the uplink transmission capacity) according to the present invention may be shared by the individual bearers of UEs participating in the service. That is, the uplink transmission capacity may be reserved jointly for the individual bearers.

Hence, according to exemplary embodiments of the present invention, such uplink transmission capacity reservation may be made once in any terminating entity common to the individual bearers, i.e. per cell for radio bearers, per gateway for S1 bearers, etc (per group call).

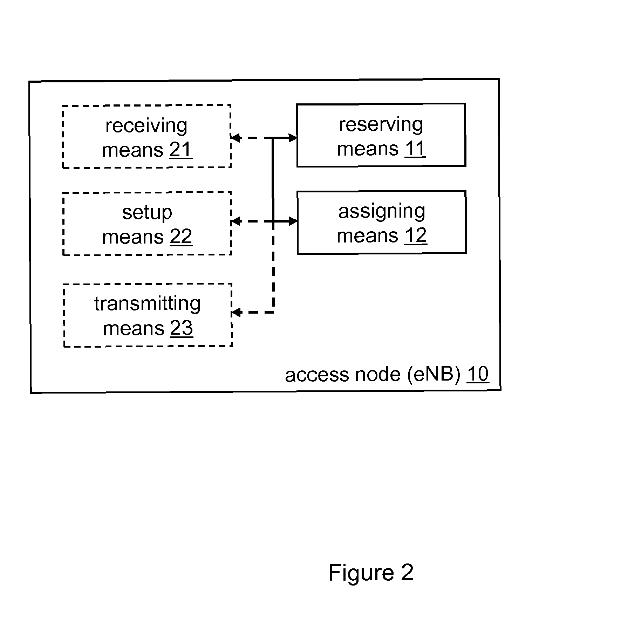

Figure 2 is a block diagram illustrating an apparatus according to exemplary embodiments of the present invention. In particular, Figure 2 shows variations of the apparatus shown in Figure 1.

According to further exemplary embodiments of the present invention, as a variation of the apparatus shown in Figure 1, the apparatus may further comprise a receiving means 21. The receiving means 21 may receive a signaling message comprising at least an indication of a bit rate for said service. The reserving means 11 may further allocate the uplink transmission capacity based on said bit rate.

In other words, the shared uplink resource reservation according to exemplary embodiments of the present invention may be a quantity in units of bit rate per group-communication service.

Hence, for example, an eNB may associate individual radio bearers to this reservation at radio-bearer setup as (possibly) instructed by a mobility management entity (MME).

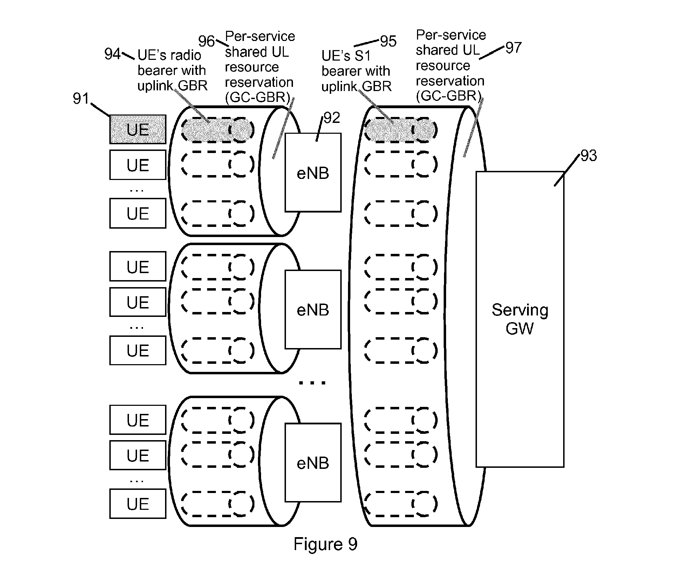

Figure 9 is a diagram illustrating principle and possible scopes of reserved uplink transmission capacity according to exemplary embodiments of the present invention.

As is derivable from Figure 9 and as is also mentioned above, a UE 91 is provided with a radio bearer 94 between the UE 91 and its serving eNB 92. The UE 91 is further provided with S1 bearer 95 between the eNB 92 and a serving gateway (S-GW) 93. While the UE's 91 radio bearer 94 has a possible uplink GBR, this possible uplink GBR parameter may be overridden by the uplink transmission capacity 96 for a service. In addition, while the UE's 91 S1 bearer 95 has a possible uplink GBR, this possible uplink GBR parameter may be overridden by the uplink transmission capacity 97 for the service.

In the eNB's RRM and hence e.g. admission control, this reservation 96, 97 may override any possible uplink GBR parameter of any UE-dedicated bearer associated to this reservation, meaning that the eNB 92 only may need to reserve this newly proposed bit rate, no matter how much total uplink GBR of UE-dedicated bearers might be associated to it. That is, an eNB 92 may not need to reserve at all in uplink a GBR of a UE-dedicated bearer associated with such a shared reservation.

This solves among others the apparent problem present with the current framework, where e.g. a voice stream's worth of uplink resources would need to be reserved separately for each UE participating in a group call, both on the air interface and in the backhaul.

A difference from the prior art in VGCS and thus a further advantage is at least that introducing this is fully transparent to current LTE UE, i.e. no VGCS-like common uplink channel needs to be introduced. Uplink transmission to a group call is still made using a UE-dedicated legacy-LTE radio bearer.

Back to Figure 1, according to exemplary embodiments of the present invention it is thus proposed to use a new QoS parameter of GBR-type. In this case, the new parameter may be coupled with a corresponding maximum bit rate (MBR) parameter similar with like the current GBR. It is proposed to name the new parameter for example per group-communication service GBR (GC-GBR).

According to further exemplary embodiments of the present invention, the signaling message may further comprise a service identifier identifying said service.

That is, an identifier for group-communication service is proposed, that may uniquely identify a given group-communication service across a predefined domain, e.g. public land mobile network (PLMN).

According to exemplary embodiments of the present invention, as the identifier for group-communication service, the existing temporary mobile group identity TMGI may be reused, which is currently used to identify multimedia broadcast multicast service (MBMS) services.

According to further exemplary embodiments of the present invention the signaling message may be a group communication service setup signaling message.

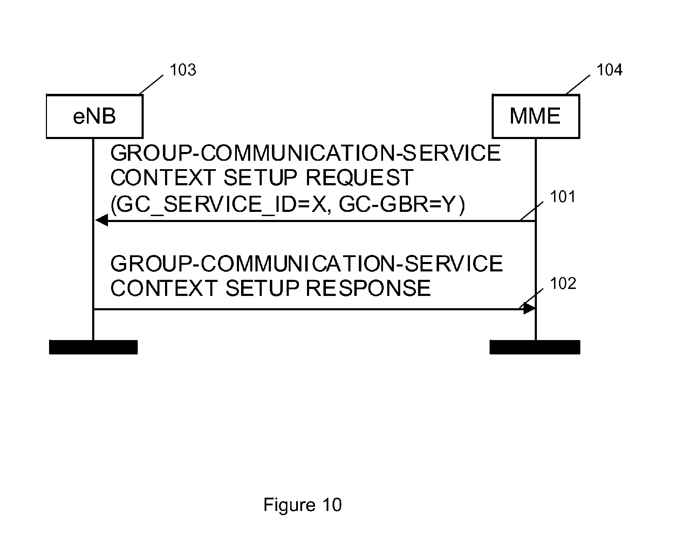

Figure 10 is a diagram illustrating possible signaling according to exemplary embodiments of the present invention. In particular, a possible group communication service setup message 101 is shown.

According to exemplary embodiments of the present invention, a new context-management procedure named e.g. "Group-communication-service context setup" is proposed for the MME 104 to request the eNB 103 to set up a context for a group-communication-service with given identifier (i.e. the group communication service identifier) and GC-GBR.

It is noted that a setup response 102 might be transmitted by the eNB 103 to the MME 104.

In case of downlink delivery of the group-communication service by MBMS, this context-management procedure may be introduced in the M2 application protocol (M2AP) and/or M3 application protocol (M3AP) specification.

Back to Figure 2, according to further exemplary embodiments of the present invention, as a variation of the apparatus shown in Figure 1, the receiving means 21 may further receive a bearer setup message which may comprise at least a bearer identifier identifying a bearer and a service identifier identifying a service to which the bearer identified by said bearer identifier is to be associated, and the apparatus may further comprise a setup means 22. The setup means 22 may set up the bearer identified by said bearer identifier as one of said plurality of bearers associated with said service identified by said service identifier.

In other words, by means of the service identifier and the bearer identifier the core network may be enabled to instruct an eNB to associate a given radio bearer with an indicated group-communication service context (and its shared uplink-resource reservation), which the eNB possibly has previously been instructed to establish by the core network.

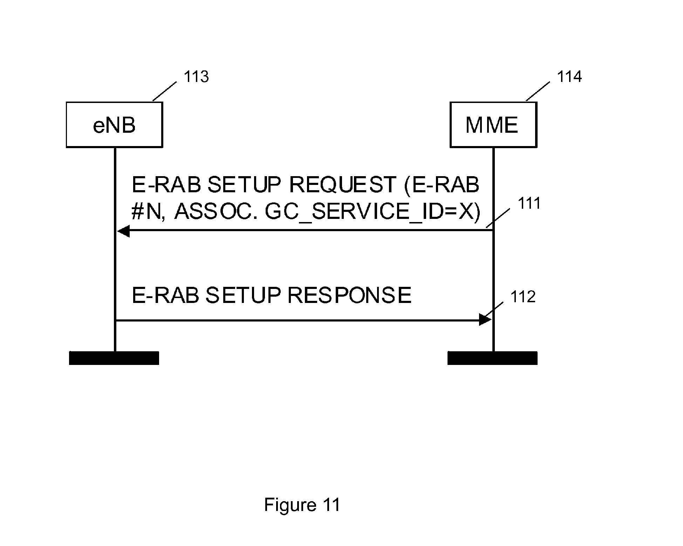

Figure 11 is a diagram illustrating possible signaling according to exemplary embodiments of the present invention. In particular, a possible bearer setup message 111 is shown.

According to exemplary embodiments of the present invention, new information element(s) in the E-RAB SETUP REQUEST message 111 are proposed, which may indicate group-communication-service context(s) to which the uplink of this bearer should be associated.

It is noted that a setup response 112 might be transmitted by the eNB 113 to the MME 114.

It is further to be noted that the above mentioned context-management procedure to set up a context for a certain group-communication-service may also be implemented by adding a GC-GBR to at least the first E-RAB SETUP REQUEST message 111 associated with the certain group-communication-service. Accordingly, the group-communication service context setup may be communicated implicitly to the eNB 113 from a first occurrence of an E-RAB SETUP REQUEST message 111 associated with the certain group-communication-service, with which also the GC-GBR is signalled.

Back to Figure 1, according to further exemplary embodiments of the present invention, the bit rate conforms with a needed bit rate of one active participant of said service. According to further exemplary embodiments of the present invention, the bit rate conforms with a multiple of said needed bit rate of one active participant of said service.

How much to assign as the GC-GBR of a given group call may depend among others on whether floor control is in place. If floor control is in place, it may be sufficient to only allocate what is needed by one participant active in the uplink, assuming that the related signalling such as speaker-right requests are carried on separate, most likely low-delay, low-bit rate bearers. In the absence of floor control, assigning just a few concurrent uplink-active participants' worth of resources may be sufficient to cover situations where colliding speakers quickly notice the situation. Alternatively, in such case a coupled MBR parameter greater than the GC-GBR may be set to accommodate such situations.

According to further exemplary embodiments of the present invention, the bearer setup message may comprise a plurality of service identifiers identifying services to which the bearer identified by said bearer identifier is to be associated.

Namely, a number of separate group calls, possibly involving different bit rates, may be ongoing in a cell, and a UE may belong to a number of groups with such a call ongoing. Such UE may conceivably need to be able to switch between those calls near-instantaneously.

Taking this into account, the present application handles the question how a UE's any given dedicated bearer may be mappable to group-communication service contexts and the related GC-GBRs. At simplest, the mapping may be one-to-one i.e. one bearer can be associated to only one service. However, in a case of participation in many concurrent calls in progress, such implementation may risk depletion of the current evolved packet system (EPS)-bearer-identity space (16). An alternative according to the present invention is thus a one-to-many mapping, i.e. any UE's single bearer may be associated to any number of group-communication services, i.e. one bearer may be used as a general-purpose bearer for group-communication services in general. An eNB scheduler may then be willing to schedule that radio bearer up to the greatest of the different associated GC-GBRs.

According to still further embodiments of the present invention, as a variation of the apparatus shown in Figure 1, the apparatus of Figure 2 may further comprise a transmitting means 23. The transmitting means 23 transmits a signaling indication of a maximum out of a plurality of bit rates corresponding to said plurality of services to which the bearer identified by said bearer identifier is to be associated.

It is thus to be further defined what may be signalled to the UE as the QoS parameters of an EPS bearer associated to a group-communication-service context (and its GC-GBR). As mentioned above, in an eNB's RRM, the GC-GBR may override a radio bearer's GBR. This does not mean that no GBR (prioritized bit rate at radio resource control (RRC) level, respectively) may be signalled to the UE at setup of the associated bearer. As a favoured option according to exemplary embodiments of the present invention and in line with the previous item the greatest one of the different GC-GBRs (if several) associated to a UE's bearer may be signalled to the UE as the uplink GBR of the bearer, in order to get the UE to properly prioritize its uplink traffic to the group-communication service, when present, among possible other uplink traffic in its logical-channel prioritization process at the medium access control (MAC) protocol.

According to further exemplary embodiments of the present invention, as a variation of the apparatus shown in Figure 1, the apparatus may further comprise a transmitting means 23. The transmitting means 23 may transmit a handover request for a participant of said service, comprising a service identifier identifying said service and a bearer identifier identifying a bearer associated with said service.

According to further exemplary embodiments of the present invention, as a variation of the apparatus shown in Figure 1, the receiving means 21 shown in Figure 2 may receive a handover request comprising a service identifier identifying said service and a bearer identifier identifying a bearer associated with said service.

In other words, by means of the service identifier and the bearer identifier, at inter-eNB handover, a source eNB may be enabled to indicate the possible group-communication services associated to each radio bearer of a UE, so that also a target eNB can properly treat this association.

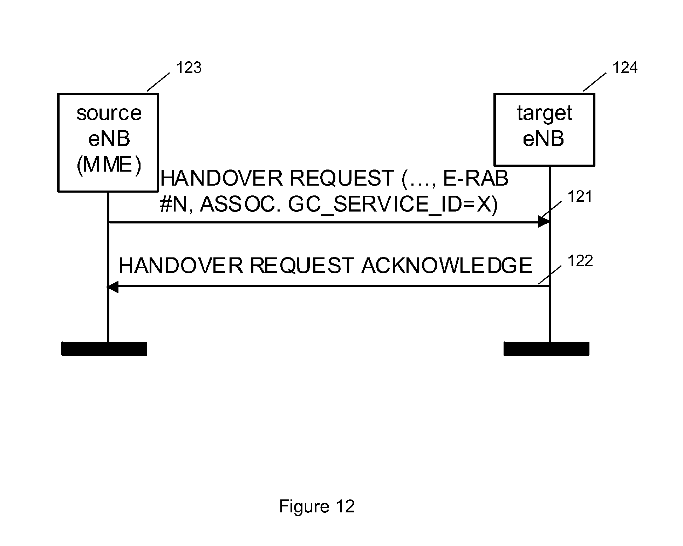

Figure 12 is a diagram illustrating possible signaling according to exemplary embodiments of the present invention. In particular, a possible handover request message 121 is shown.

According to exemplary embodiments of the present invention, new information element(s) in the HANDOVER REQUEST message 121 are proposed for indicating such association information of evolved UMTS terrestrial radio access network (EUTRAN) radio access bearers (E-RAB) to the potential handover-target eNB 124. It is to be noted that those new information element(s) may also be incorporated into the message with same name in the X2 application protocol (X2AP) specification.

A handover request acknowledge 122 might be transmitted by the target eNB 124 to the initiating source eNB 123.

It is to be noted that according to exemplary embodiments of the present invention the service may be a group communication service. According to still further embodiments of the present invention the bit rate may be a group communication service guaranteed bit rate.

According to still further exemplary embodiments of the present invention, the reserved uplink transmission capacity may be reserved jointly to each bearer of said plurality of bearers associated with said service. Such jointly reservation of transmission capacity resources for each bearer of said plurality of bearers associated with a service may be done per network (e.g. per base station, for example an eNB) element or per cell.

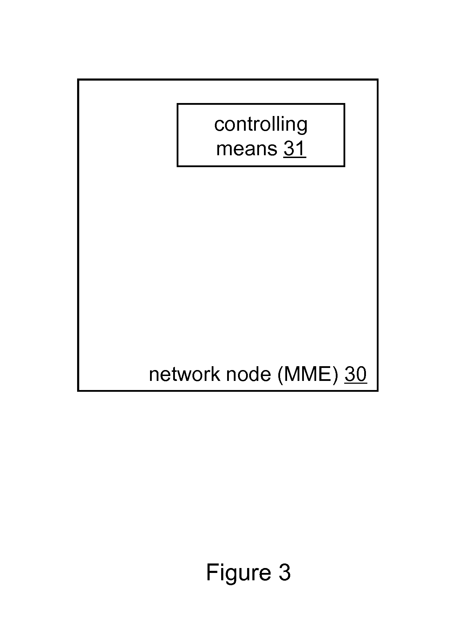

Figure 3 is a block diagram illustrating an apparatus according to exemplary embodiments of the present invention.

As shown in Figure 3, according to exemplary embodiments of the present invention, the apparatus may be a network node 30 comprising a controlling means 31. The controlling means 31 may control reservation of uplink transmission capacity for a service and assignment of said uplink transmission capacity reservation jointly to a plurality of bearers associated with said service.

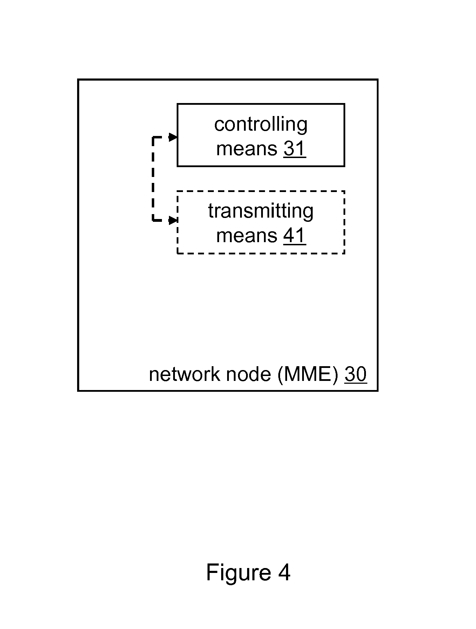

Figure 4 is a block diagram illustrating an apparatus according to exemplary embodiments of the present invention. In particular, Figure 4 shows variations of the apparatus shown in Figure 3.

According to further exemplary embodiments of the present invention, as a variation of the apparatus shown in Figure 3, the apparatus 30 may further comprise a transmitting means 41. The transmitting means 41 may transmit a signaling message comprising at least an indication of a bit rate for said service.

According to further exemplary embodiments of the present invention, the signaling message may further comprise a service identifier identifying said service.

According to still further exemplary embodiments of the present invention, the transmitting means 41 may further transmit a bearer setup message comprising at least a bearer identifier identifying a bearer and a service identifier identifying a service to which the bearer identified by said bearer identifier is to be associated.

According to still further exemplary embodiments of the present invention, the bit rate conforms with a needed bit rate of one active participant of said service.

According to still further exemplary embodiments of the present invention, the bit rate conforms with a multiple of said needed bit rate of one active participant of said service.

According to still further exemplary embodiments of the present invention, the bearer setup message may comprise a plurality of service identifiers identifying services to which the bearer identified by said bearer identifier may be associated.

According to exemplary embodiments of the present invention, the service may be a group communication service. According to further exemplary embodiments of the present invention, the signaling message may be a group communication service setup signaling message. According to still further exemplary embodiments of the present invention, the bit rate may be a group communication service guaranteed bit rate.

According to still further exemplary embodiments of the present invention, the reserved uplink transmission capacity may be reserved jointly to each bearer of said plurality of bearers associated with said service. Such jointly reservation of transmission capacity resources for each bearer of said plurality of bearers associated with a service may be done per network (e.g. per base station, for example an eNB) element or per cell.

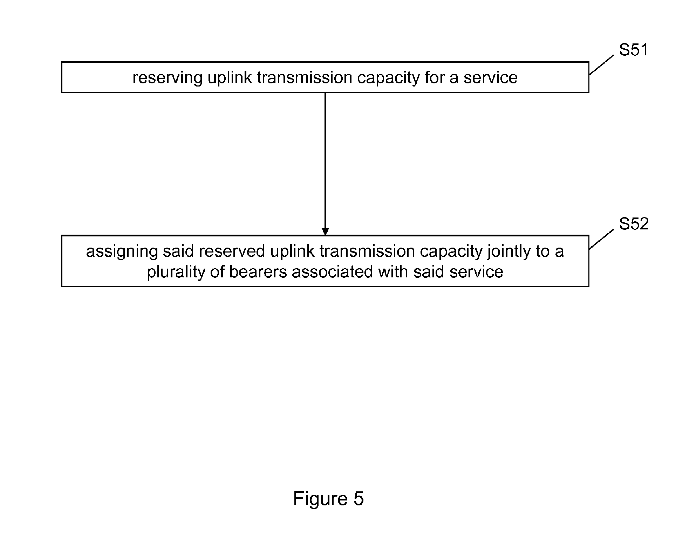

Figure 5 is a schematic diagram of a procedure according to exemplary embodiments of the present invention.

As shown in Figure 5, a procedure according to exemplary embodiments of the present invention may comprise an operation of reserving S51 uplink transmission capacity for a service, and an operation of assigning S52 said reserved uplink transmission capacity jointly to a plurality of bearers associated with said service.

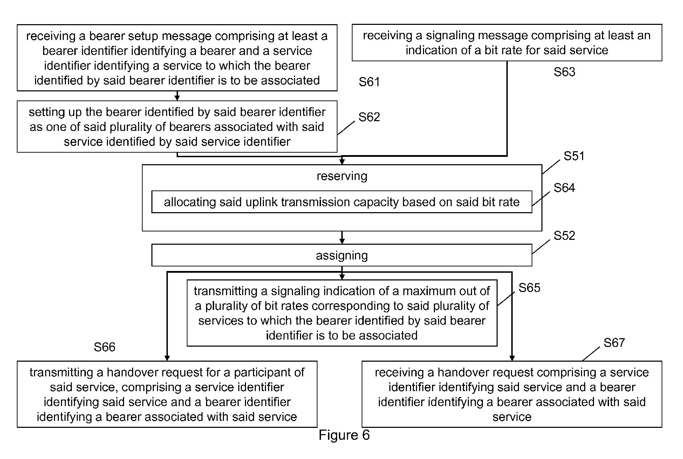

Figure 6 is a schematic diagram of a procedure according to exemplary embodiments of the present invention. In particular, Figure 6 shows variations of the procedure shown in Figure 5.

According to a variation of the procedure shown in Figure 5, exemplary additional operations and exemplary details of the reserving operation S51 are given, which are inherently independent from each other as such. According to such variation, an exemplary method according to exemplary embodiments of the present invention may comprise an operation of receiving S63 a signaling message comprising at least an indication of a bit rate for said service.

Such exemplary reserving S51 operation according to exemplary embodiments of the present invention may comprise an operation of allocating S64 said uplink transmission capacity based on said bit rate.

According to a variation of the procedure shown in Figure 5, the signaling message may further comprise a service identifier identifying said service.

According to a variation of the procedure shown in Figure 5, exemplary additional operations are given in Figure 6, which are inherently independent from each other as such. According to such variation, an exemplary method according to exemplary embodiments of the present invention may comprise an operation of receiving S61 a bearer setup message comprising at least a bearer identifier identifying a bearer and a service identifier identifying a service to which the bearer identified by said bearer identifier is to be associated, and an operation of setting up S62 the bearer identified by said bearer identifier as one of said plurality of bearers associated with said service identified by said service identifier.

According to a variation of the procedure shown in Figure 5, the bit rate conforms with a needed bit rate of one active participant of said service.

According to a further variation of the procedure shown in Figure 5, the bit rate conforms with a multiple of said needed bit rate of one active participant of said service.

According to a further variation of the procedure shown in Figure 5, the bearer setup message may comprise a plurality of service identifiers identifying services to which the bearer identified by said bearer identifier is to be associated.

According to a variation of the procedure shown in Figure 5, exemplary additional operations are given in Figure 6, which are inherently independent from each other as such. According to such variation, an exemplary method according to exemplary embodiments of the present invention may comprise an operation of transmitting S65 a signaling indication of a maximum out of a plurality of bit rates corresponding to said plurality of services to which the bearer identified by said bearer identifier is to be associated.

According to a variation of the procedure shown in Figure 5, exemplary additional operations are given in Figure 6, which are inherently independent from each other as such. According to such variation, an exemplary method according to exemplary embodiments of the present invention may comprise an operation of transmitting S66 a handover request for a participant of said service, comprising a service identifier identifying said service and a bearer identifier identifying a bearer associated with said service.

According to a variation of the procedure shown in Figure 5, exemplary additional operations are given in Figure 6, which are inherently independent from each other as such. According to such variation, an exemplary method according to exemplary embodiments of the present invention may comprise an operation of receiving S67 a handover request comprising a service identifier identifying said service and a bearer identifier identifying a bearer associated with said service.

According to further exemplary embodiments of the present invention, the reserved uplink transmission capacity may be reserved jointly to each bearer of said plurality of bearers associated with said service. Such jointly reservation of transmission capacity resources for each bearer of said plurality of bearers associated with a service may be done per network (e.g. per base station, for example an eNB) element or per cell.

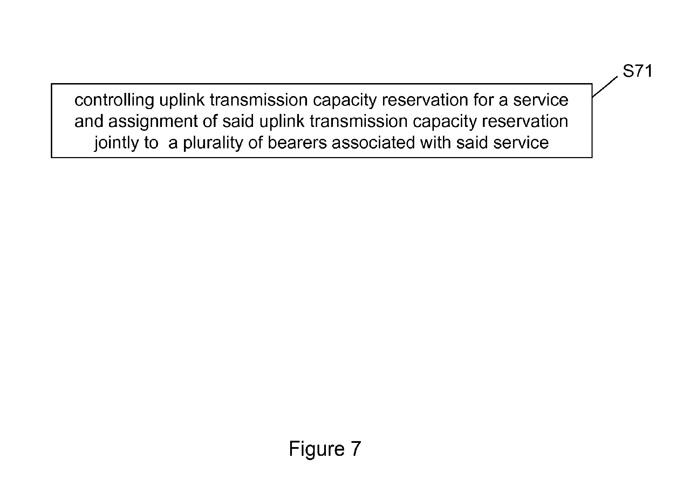

Figure 7 is a schematic diagram of a procedure according to exemplary embodiments of the present invention.

As shown in Figure 7, a procedure according to exemplary embodiments of the present invention may comprise an operation of controlling S71 reservation of uplink transmission capacity for a service and assignment of said uplink transmission capacity reservation jointly to a plurality of bearers associated with said service.

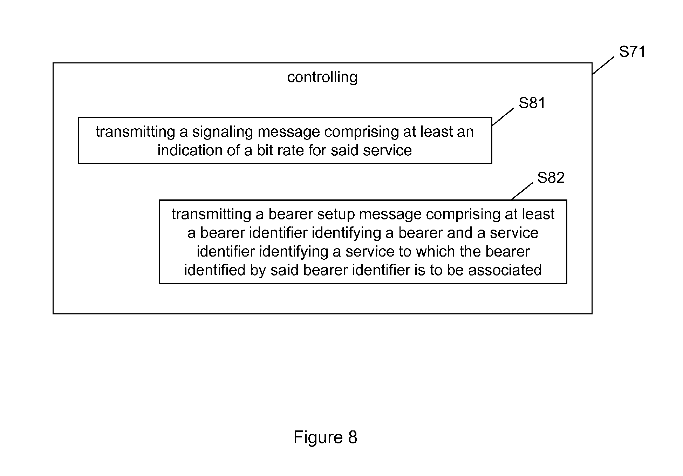

Figure 8 is a schematic diagram of a procedure according to exemplary embodiments of the present invention. In particular, Figure 8 shows variations of the procedure shown in Figure 7.

According to a variation of the procedure shown in Figure 7, exemplary details of the controlling S71 operation are given in Figure 8, which are inherently independent from each other as such.

Such exemplary controlling S71 operation according to exemplary embodiments of the present invention may comprise an operation of transmitting S81 a signaling message comprising at least an indication of a bit rate for said service.

According to a variation of the procedure shown in Figure 7, the signaling message may further comprise a service identifier identifying said service.

According to a variation of the procedure shown in Figure 7, exemplary details of the controlling S71 operation are given in Figure 8, which are inherently independent from each other as such.

Such exemplary controlling S71 operation according to exemplary embodiments of the present invention may comprise an operation of transmitting S82 a bearer setup message comprising at least a bearer identifier identifying a bearer and a service identifier identifying a service to which the bearer identified by said bearer identifier is to be associated.

According to a variation of the procedure shown in Figure 7, the bit rate conforms with a needed bit rate of one active participant of said service.

According to a further variation of the procedure shown in Figure 7, the bit rate conforms with a multiple of said needed bit rate of one active participant of said service.

According to a variation of the procedure shown in Figure 7, the bearer setup message may comprise a plurality of service identifiers identifying services to which the bearer identified by said bearer identifier is to be associated.

According to further exemplary embodiments of the present invention, the reserved uplink transmission capacity may be reserved jointly to each bearer of said plurality of bearers associated with said service. Such jointly reservation of transmission capacity resources for each bearer of said plurality of bearers associated with a service may be done per network (e.g. per base station, for example an eNB) element or per cell.

According to modifications of exemplary embodiments of the present invention, the downlink of the group service may be delivered over individual unicast bearers. According to further modifications of exemplary embodiments of the present invention, the downlink of the group service may be delivered over a common broadcast transmission that the participating UEs need to receive.

According to the present invention a mapping/relation between radio bearers, S1 bearers and group-communication-service contexts (and their GC-GBRs) at the eNB is proposed in several ways. According to modifications of exemplary embodiments of the present invention, each radio bearer may be coupled with its own S1-bearer counterpart, as in the current bearer model.

According to further modifications of exemplary embodiments of the present invention, and especially if downlink delivery of the service is handled using MBMS-specific bearers, it is proposed that for uplink of the group call, only one S1 bearer may be set up per group-communication service per cell (or eNB), which would essentially bind the proposed GC-GBR as an attribute of that S1 bearer. This proposal may however require changing the current bearer model, as more than one radio bearers could now be associated to this S1 bearer.

It is thus noted that the simplest solution is preserving the current one-to-one mapping, such that the output of any speaking call participant may be carried over their own S1 bearer. Regardless of this choice, it is worth noting that the proposed GC-GBR concept would provide the resource-reservation savings in the backhaul just as on the air interface.

It is proposed to change current specifications in the way as mentioned above. In particular, technical specifications (TS) TS 23.401, TS 36.300, TS 36.423 and TS 36.413 are foreseen to be impacted, however, also other technical specifications may be impacted.

Entities impacted by the invention may be at least the MME and the eNB. In contrast thereto, and as opposed to introducing the VGCS-type solution in LTE, there may be no impact to the UE. It is noted that as a new enabler for transmission-resource management, the needed scope of signalling for the proposed new parameters may be similar to the existing allocation and retention priority (ARP).

The above-described procedures and functions may be implemented by respective functional elements, processors, or the like, as described below.

In the foregoing exemplary description of the network entity, only the units that may be relevant for understanding the principles of the invention have been described using functional blocks. The network entity may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

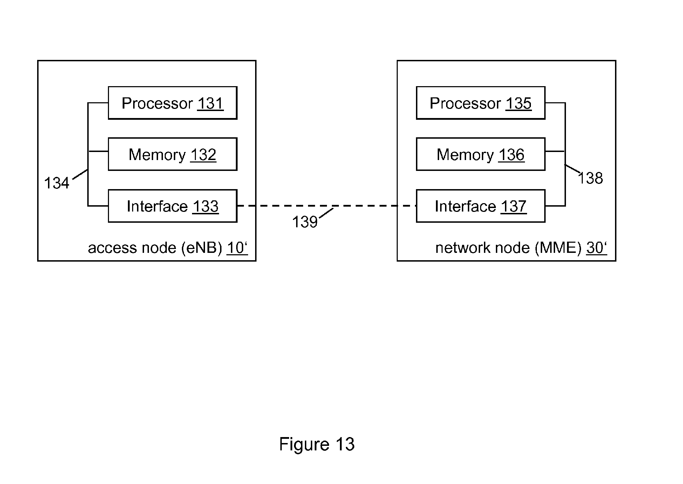

In Figure 13, an alternative illustration of apparatuses according to exemplary embodiments of the present invention is depicted by way of a system comprising apparatuses according to exemplary embodiments of the present invention. As indicated in Figure 13, according to exemplary embodiments of the present invention, the apparatus (access node) 10' (corresponding to the access node 10) comprises a processor 131, a memory 132 and an interface 133, which may be connected by a bus 134 or the like. Further, according to exemplary embodiments of the present invention, the apparatus (network node) 30' (corresponding to the network node 30) comprises a processor 135, a memory 136 and an interface 137, which may be connected by a bus 138 or the like, and the apparatuses may be connected via link 139, respectively, thus forming a system.

The processor 131/135 and/or the interface 133/137 may also include a modem or the like to facilitate communication over a (hardwire or wireless) link, respectively. The interface 133/137 may include a suitable transceiver coupled to one or more antennas or communication means for (hardwire or wireless) communications with the linked or connected device(s), respectively. The interface 133/137 is generally configured to communicate with at least one other apparatus, i.e. the interface thereof.

The memory 132/136 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to exemplary embodiments of the present invention, an apparatus representing the access node 10 comprises at least one processor 131, at least one memory 132 including computer program code, and at least one interface 133 configured for communication with at least another apparatus. The processor (i.e. the at least one processor 131, with the at least one memory 132 and the computer program code) is configured to perform reserving uplink transmission capacity for a service (thus the apparatus comprising corresponding means for reserving), and to perform assigning said reserved uplink transmission capacity jointly to a plurality of bearers associated with said service (thus the apparatus comprising corresponding means for assigning).

According to exemplary embodiments of the present invention, an apparatus representing the network node 30 comprises at least one processor 135, at least one memory 136 including computer program code, and at least one interface 137 configured for communication with at least another apparatus. The processor (i.e. the at least one processor 135, with the at least one memory 136 and the computer program code) is configured to perform controlling reservation of uplink transmission capacity for a service and assignment of said uplink transmission capacity reservation jointly to a plurality of bearers associated with said service (thus the apparatus comprising corresponding means for controlling).

For further details regarding the operability/functionality of the individual apparatuses, reference is made to the above description in connection with any one of Figures 1 to 12, respectively.

For the purpose of the present invention as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for shared uplink resource reservation per group-communication service. Such measures exemplarily comprise reserving uplink transmission capacity for a group communication service, and assigning said reserved uplink transmission capacity jointly to a plurality of bearers associated with said group communication service.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

### List of acronyms and abbreviations

- 3GPP: 3^{rd} Generation Partnership Project
- APN: access point name
- APN-AMBR: per APN aggregate maximum bit rate
- ARP: allocation and retention priority
- eNB: evolved NodeB
- EPS: evolved packet system
- E-RAB: EUTRAN radio access bearer
- EUTRAN: evolved UMTS terrestrial radio access network
- GBR: guaranteed bit rate
- GC-GBR: per group-communication service GBR
- GSM: Global System for Mobile Communications
- LTE: Long Term Evolution
- M2AP: M2 application protocol
- M3AP: M3 application protocol
- MAC: medium access control
- MBMS: multimedia broadcast multicast service
- MBR: maximum bit rate
- MME: mobility management entity
- PLMN: public land mobile network
- QoS: quality of service
- RRC: radio resource control
- RRM: radio resource management
- S-GW: serving gateway
- TS: technical specification
- UE: user equipment
- UE-AMBR: per UE aggregate maximum bit rate
- VGCS: voice group call service
- X2AP: X2 application protocol

## Claims

1. A method comprising
reserving uplink transmission capacity for a service, and
assigning said reserved uplink transmission capacity jointly to a plurality of bearers associated with said service.

2. The method according to claim 1, further comprising
receiving a signaling message comprising at least an indication of a bit rate for said service, wherein
in relation to said reserving, the method further comprises
allocating said uplink transmission capacity based on said bit rate.

3. The method according to claim 2, wherein
said bit rate conforms with a needed bit rate of one active participant of said service, or
said bit rate conforms with a multiple of said needed bit rate of one active participant of said service.

4. The method according to claim 2 or 3, wherein
said signaling message further comprises a service identifier identifying said service.

5. The method according to any of claims 1 to 3, further comprising
receiving a bearer setup message comprising at least a bearer identifier identifying a bearer and a service identifier identifying a service to which the bearer identified by said bearer identifier is to be associated, and
setting up the bearer identified by said bearer identifier as one of said plurality of bearers associated with said service identified by said service identifier.

6. The method according to claim 5, wherein
said bearer setup message comprises a plurality of service identifiers identifying services to which the bearer identified by said bearer identifier is to be associated.

7. The method according to claim 6, further comprising
transmitting a signaling indication of a maximum out of a plurality of bit rates corresponding to said plurality of services to which the bearer identified by said bearer identifier is to be associated.

8. The method according to claim 1 to 4, further comprising
transmitting a handover request for a participant of said service, comprising a service identifier identifying said service and a bearer identifier identifying a bearer associated with said service.

9. The method according to claim 1 to 4, further comprising
receiving a handover request comprising a service identifier identifying said service and a bearer identifier identifying a bearer associated with said service.

10. The method according to any of claims 1 to 9, wherein
said service is a group communication service,
said signaling message is a group communication service setup signaling message, and
said bit rate is a group communication service guaranteed bit rate.

11. The method according to any of claims 1 to 10, wherein
said reserved uplink transmission capacity is reserved jointly to each bearer of said plurality of bearers associated with said service.

12. A method comprising
controlling uplink transmission capacity reservation for a service and assignment of said uplink transmission capacity reservation jointly to a plurality of bearers associated with said service.

13. The method according to claim 12, wherein
in relation to said controlling, said method further comprises
transmitting a signaling message comprising at least an indication of a bit rate for said service.

14. The method according to claim 13, wherein
said bit rate conforms with a needed bit rate of one active participant of said service, or
said bit rate conforms with a multiple of said needed bit rate of one active participant of said service.

15. The method according to claim 13 or 14, wherein
said signaling message further comprises a service identifier identifying said service.

16. The method according to any of claims 12 to 14, wherein
in relation to said controlling, said method further comprises
transmitting a bearer setup message comprising at least a bearer identifier identifying a bearer and a service identifier identifying a service to which the bearer identified by said bearer identifier is to be associated.

17. The method according to claim 16, wherein
said bearer setup message comprises a plurality of service identifiers identifying services to which the bearer identified by said bearer identifier is to be associated.

18. The method according to any of claims 12 to 17, wherein
said service is a group communication service,
said signaling message is a group communication service setup signaling message, and
said bit rate is a group communication service guaranteed bit rate.

19. The method according to any of claims 12 to 18, wherein
said assignment of said uplink transmission capacity reservation is controlled to apply jointly to each bearer of said plurality of bearers associated with said service.

20. An apparatus comprising
reserving means configured to reserve uplink transmission capacity for a service, and
assigning means configured to assign said reserved uplink transmission capacity jointly to a plurality of bearers associated with said service.

21. The apparatus according to claim 20, further comprising
receiving means configured to receive a signaling message comprising at least an indication of a bit rate for said service, wherein
said reserving means is further configured to
allocate said uplink transmission capacity based on said bit rate.

22. The apparatus according to claim 21, wherein
said bit rate conforms with a needed bit rate of one active participant of said service, or
said bit rate conforms with a multiple of said needed bit rate of one active participant of said service.

23. The apparatus according to claim 21 or 22, wherein
said signaling message further comprises a service identifier identifying said service.

24. The apparatus according to any of claims 21 to 22, wherein
said receiving means is further configured to receive a bearer setup message comprising at least a bearer identifier identifying a bearer and a service identifier identifying a service to which the bearer identified by said bearer identifier is to be associated, and
said apparatus further comprises
setup means configured to set up the bearer identified by said bearer identifier as one of said plurality of bearers associated with said service identified by said service identifier.

25. The apparatus according to claim 24, wherein
said bearer setup message comprises a plurality of service identifiers identifying services to which the bearer identified by said bearer identifier is to be associated.

26. The apparatus according to claim 25, further comprising
transmitting means configured to transmit a signaling indication of a maximum out of a plurality of bit rates corresponding to said plurality of services to which the bearer identified by said bearer identifier is to be associated.

27. The apparatus according to claim 20 to 23, further comprising
transmitting means configured to transmit a handover request for a participant of said service, comprising a service identifier identifying said service and a bearer identifier identifying a bearer associated with said service.

28. The apparatus according to claim 21 to 23, wherein
said receiving means is configured to receive a handover request comprising a service identifier identifying said service and a bearer identifier identifying a bearer associated with said service.

29. The apparatus according to any of claims 20 to 28, wherein
said service is a group communication service,
said signaling message is a group communication service setup signaling message, and
said bit rate is a group communication service guaranteed bit rate.

30. The apparatus according to any of claims 20 to 29, wherein
said reserved uplink transmission capacity is reserved jointly to each bearer of said plurality of bearers associated with said service.

31. The apparatus according to any of claims 20 to 30, wherein
the apparatus is operable as or at a base station or access node of a cellular system, and/or
the apparatus is operable in at least one of a LTE and a LTE-A cellular system.

32. An apparatus comprising
controlling means configured to control uplink transmission capacity reservation for a service and assignment of said uplink transmission capacity reservation jointly to a plurality of bearers associated with said service.

33. The apparatus according to claim 32, further comprising
transmitting means configured to transmit a signaling message comprising at least an indication of a bit rate for said service.

34. The apparatus according to claim 33, wherein
said bit rate conforms with a needed bit rate of one active participant of said service, or
said bit rate conforms with a multiple of said needed bit rate of one active participant of said service.

35. The apparatus according to claim 33 or 34, wherein
said signaling message further comprises a service identifier identifying said service.

36. The apparatus according to any of claims 33 to 34, wherein
said transmitting means is further configured to transmit a bearer setup message comprising at least a bearer identifier identifying a bearer and a service identifier identifying a service to which the bearer identified by said bearer identifier is to be associated.

37. The apparatus according to claim 36, wherein
said bearer setup message comprises a plurality of service identifiers identifying services to which the bearer identified by said bearer identifier is to be associated.

38. The apparatus according to any of claims 32 to 37, wherein
said service is a group communication service,
said signaling message is a group communication service setup signaling message, and
said bit rate is a group communication service guaranteed bit rate.

39. The apparatus according to any of claims 32 to 38, wherein
said assignment of said uplink transmission capacity reservation is controlled to apply jointly to each bearer of said plurality of bearers associated with said service.

40. The apparatus according to any of claims 32 to 39, wherein
the apparatus is operable as or at a mobility management entity of a cellular system, and/or
the apparatus is operable in at least one of a LTE and a LTE-A cellular system.

41. A system comprising
at least one apparatus according to any of claims 20 to 31, and
at least one apparatus according to any of claims 32 to 40.

42. A computer program product comprising computer-executable computer program code which, when the program is run on a computer, is configured to cause the computer to carry out the method according to any one of claims 1 to 11 or 12 to 19.

43. The computer program product according to claim 42, wherein the computer program product comprises a computer-readable medium on which the computer-executable computer program code is stored, and/or wherein the program is directly loadable into an internal memory of the processor.
